# EUROPEAN PATENT APPLICATION

(11) **EP 4 660 608 A1**
(43) Date of publication of application: **10.12.2025**
(21) Application number: 25180086.8
(22) Date of filing: 02.06.2025
(51) Int. Cl.: G01N 15/14, G01N 21/53, G01N 21/85, G01N 21/47, G01N 15/00

(54) **OPTICAL MEASUREMENT SYSTEM AND COMPUTER PROGRAM**

(30) Priority: 07.06.2024 JP 2024092863
(71) Applicant: Otsuka Electronics Co., Ltd., Hirakata-shi, Osaka 573-1132 (JP)
(72) Inventor: WAKAYAMA, Ikuo, Hirakata-shi, Osaka, 573-1132 (JP); NAGASAWA, Hiroya, Hirakata-shi, Osaka, 573-1132 (JP); TOMOMATSU, Katsuyuki, Hirakata-shi, Osaka, 573-1132 (JP)
(74) Representative: Hoffmann Eitle

(57) **Abstract**

An optical measurement system that performs measurement according to a light scattering method includes a sample holder configured to hold a sample, a light source configured to generate light to irradiate the sample, a detector configured to detect scattered light caused by the sample, a fiber probe that includes a probe which is connected to the sample holder and arranged adjacent to the sample and an optical fiber which optically connects the probe to the light source and the detector, and a processing device configured to analyze a detection result from the detector and output a measurement result. The sample holder is arbitrarily selected from a plurality of types of sample holders prepared in advance. The processing device outputs a user interface screen tailored to the sample holder.

## Description

The present disclosure relates to an optical measurement system and a computer program for the optical measurement system.

### INTRODUCTION

A user may have various needs in measuring a sample according to an optical method. For example, Japanese Patent Application Laying-Open No. 2019-067611 discloses an optical measuring device or the like that can meet various needs of a user.

### SUMMARY

The present disclosure provide various aspects that can flexibly meet various needs of a user.

(Aspect 1) According to an aspect of the present disclosure, there is provided an optical measurement system configured to perform measurement according to a light scattering method. The optical measurement system includes: a sample holder configured to hold a sample; a light source configured to generate light to irradiate the sample; a detector configured to detect scattered light caused by the sample; a fiber probe that includes a probe which is connected to the sample holder and arranged adjacent to the sample, and an optical fiber which optically connects the probe to the light source and the detector; and a processing device configured to analyze a detection result from the detector and output a measurement result. The sample holder is arbitrarily selected from a plurality of types of sample holders prepared in advance. The processing device is configured to output a user interface screen tailored to the sample holder.

(Aspect 2) In aspect 1, the fiber probe may be arbitrarily selected from a plurality of types of fiber probes prepared in advance. The user interface screen output by the processing device may be tailored to the fiber probe.

(Aspect 3) In aspect 1 or 2, the processing device may obtain configuration information indicating a type of the sample holder included in the optical measurement system.

(Aspect 4) In aspect 3, the processing device may obtain the configuration information from at least one of a setting unit operated by the user, an operation performed on the user interface screen by a user, or a reader configured to read information of a tag attached to the sample holder.

(Aspect 5) In any of aspects 1 to 4, the plurality of types of sample holders may include a first sample holder configured to hold a cell containing a sample at an angle relative to the probe.

(Aspect 6) In any of aspects 1 to 5, the plurality of types of sample holders may include a second sample holder configured to maintain a positional relationship between the probe and a tube through which the sample flows.

(Aspect 7) In any of aspects 1 to 6, the plurality of types of sample holders may include a third sample holder configured to hold the sample in an internal space and maintain a positional relationship between the internal space and the probe.

(Aspect 8) In any of aspects 1 to 7, the processing device may output the user interface screen that is tailored to the sample holder and includes a measurement result.

(Aspect 9) According to another aspect of the present disclosure, there is provided a computer program executed by a computer included in an optical measurement system configured to perform measurement according to a light scattering method. The optical measurement system further includes: a sample holder configured to hold a sample; a light source configured to generate light to irradiate the sample; a detector configured to detect scattered light caused by the sample; and a fiber probe that includes a probe which is connected to the sample holder and arranged adjacent to the sample, and an optical fiber which optically connects the probe to the light source and the detector. The sample holder is arbitrarily selected from a plurality of types of sample holders prepared in advance. The computer program causes the computer to perform operations including: obtaining configuration information indicating a type of the sample holder included in the optical measurement system; outputting a user interface screen tailored to the sample holder; and analyzing a detection result from the detector and outputting a measurement result.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a schematic diagram illustrating an example configuration of an optical measurement system according to the present embodiment.
Fig. 2 is a schematic diagram illustrating an example configuration of a measuring device in the optical measurement system according to the present embodiment.
Fig. 3 is a schematic diagram illustrating an example configuration of a processing device in the optical measurement system according to the present embodiment.
Fig. 4 is a perspective view illustrating an example configuration of a fiber probe in the optical measurement system according to the present embodiment.
Figs. 5A, 5B, 6A, 6B, and 7 are schematic diagrams each illustrating an example sample holder in the optical measurement system according to the present embodiment.
Fig. 8 is a flowchart illustrating an example measurement process of a sample using the optical measurement system according to the present embodiment.
Figs. 9 to 11 are schematic diagrams each illustrating an example user interface screen output by the processing device during system assembly according to the present embodiment.
Figs. 12 to 14 are schematic diagrams each illustrating an example user interface screen output by the processing device during measurement according to the present embodiment.
Figs. 15 to 17 are schematic diagrams each illustrating an example user interface screen illustrating a measurement result output by the processing device according to the present embodiment.

### DETAILED DESCRIPTION

An embodiment of the present disclosure will be described in detail with reference to the drawings. The same or equivalent parts in the drawings will be denoted by the same reference numerals, and the description thereof will not be repeated.

### <A. Optical Measurement System 1>

An optical measurement system 1 is configured to perform measurement according to a light scattering method. Examples of the light scattering method include a dynamic light scattering method, an electrophoretic light scattering method, and a static light scattering method.

The dynamic light scattering is also referred to as a photon correlation method. The Brownian motion of particles in solution is dependent on particle size. When light is irradiated on particles, scattered light is observed, and the scattered light from small particles shows quick fluctuations, while the scattered light from large particles shows slow fluctuations. The particle diameter, the particle size distribution, and the like of the particles may be determined by analyzing the fluctuations of particles in the solution based on the observed scattered light.

The electrophoretic light scattering method is also referred to as a laser Doppler method. The laser Doppler method utilizes the Doppler effect in which when light is reflected from a moving object, the frequency of the reflected light varies in proportion to the speed of the object. Thus, when light is irradiated on electrophoretic particles, the frequency of scattered light shifts. Since the frequency shift is proportional to the electrophoretic speed of the particles, the electrophoretic speed of the particles may be determined from the frequency shift.

The static light scattering method is based on the fact that when a sample is irradiated with light, the intensity of scattered light caused by a solute in the sample depends on the molecular weight of the solute. Since the intensity of scattered light also depends on the solute concentration of the sample, the molecular weight of the solute may be determined by analyzing the intensities of scattered light obtained from a plurality of samples with different solute concentrations.

Optical measurement system 1 may perform measurement according to at least one of a dynamic light scattering method, a static light scattering method, and an electrophoretic light scattering method, or may perform measurement according to another light scattering method.

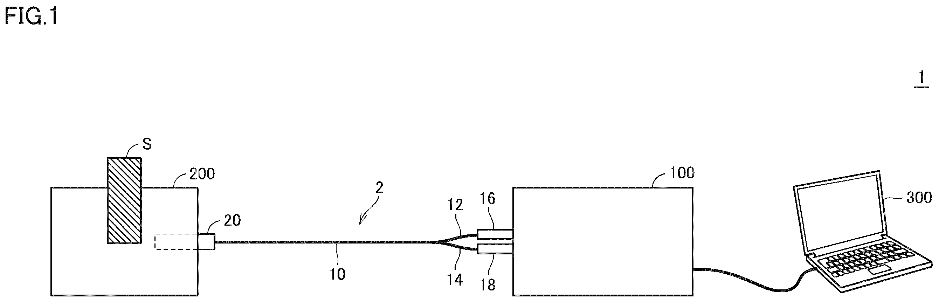

With reference to Fig. 1, optical measurement system 1 includes a measuring device 100, a sample holder 200, and a processing device 300.

Sample holder 200 holds a sample. The expression of "holding a sample" means that the sample is maintained in such a state that it can be measured according to a light scattering method. As described below, a sample can be maintained in a measurable state by any method or any mechanism.

Measuring device 100 and sample holder 200 are optically connected to each other by a fiber probe 2.

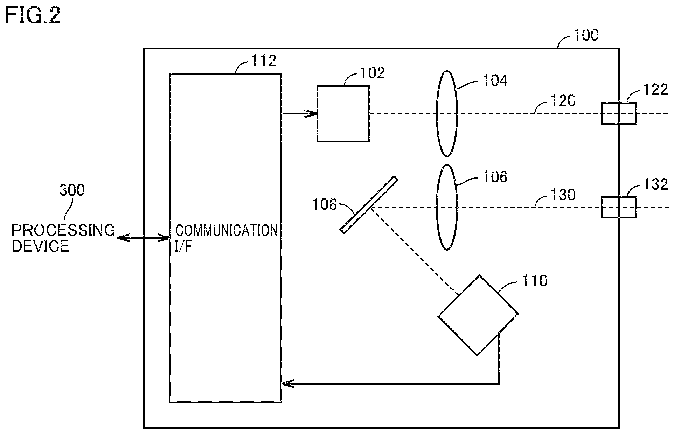

The light generated by a light source (a light source 102 in Fig. 2) of measuring device 100 propagates through fiber probe 2 and is irradiated on a sample S which is held in sample holder 200. The scattered light caused by sample S is guided by fiber probe 2 to a detector (a detector 110 in Fig. 2) of measuring device 100. Processing device 300 analyzes a detection result from the detector of measuring device 100 and outputs a measurement result. Processing device 300 performs an analysis process, a measurement value calculation process and the like based on the detection result.

Fiber probe 2 includes a Y-branched optical fiber 10 and a probe main body 20 (probe). Y-branched optical fiber 10 includes two optical fibers 12 and 14. At one end of Y-branched optical fiber 10, optical fibers 12 and 14 are separated from each other, and at the other end of Y-branched optical fiber 10, optical fibers 12 and 14 are connected to probe main body 20.

Optical fiber 12 is connected to measuring device 100 by a coupler 16 arranged at a distal end of optical fiber 12, and optical fiber 14 is connected to measuring device 100 by a coupler 18 arranged at a distal end of optical fiber 14. Y-branched optical fiber 10 optically connects probe main body 20 to the light source and the detector. Light from the light source of measuring device 100 propagates through optical fiber 12 and reaches probe main body 20. Scattered light caused by sample S propagates through optical fiber 14 and reaches the detector.

Probe main body 20 is connected to sample holder 200 and arranged adjacent to sample S. Probe main body 20 irradiates light propagated through optical fiber 12, and guides scattered light caused by sample S to optical fiber 14.

A plurality of types of sample holders 200 with different structures may be provided in optical measurement system 1. Since measuring device 100 and sample holder 200 (or sample S) are optically connected to each other by fiber probe 2 in optical measurement system 1, there are few restrictions on the positional relationship between measuring device 100 and sample holder 200 and the structure of sample holder 200. In other words, any sample holder suitable for sample S may be provided without being restricted by the position and size of measuring device 100. Therefore, measurement can be performed according to the light scattering method with a higher degree of versatility and mobility.

Also, a plurality of types of fiber probes 2 may be provided for sample holder 200.

Although Fig. 1 illustrates an example configuration in which measuring device 100 and sample holder 200 are arranged separately, measuring device 100 and sample holder 200 may be arranged in a connected configuration. In the case of a connected configuration, sample holder 200 may be arranged on the top of measuring device 100, for example.

### <B. Measuring device 100>

With reference to Fig. 2, measuring device 100 includes a light source 102, a lens 104, a lens 106, a mirror 108, a detector 110, and a communication interface 112.

Light source 102 generates light for irradiating sample S. An appropriate light source may be selected as light source 102 according to the type of sample S, the measurement method, or the like. Light source 102 may be, for example, a He-Ne laser or a solid-state laser. Lens 104 and a coupler 122 are arranged on an optical axis 120 of light source 102. Coupler 122 is connected to coupler 16 illustrated in Fig. 1.

Detector 110 detects scattered light caused by sample S. Lens 106 and mirror 108 are arranged on an optical axis 130 of a coupler 132 which is connected to coupler 18 illustrated in Fig. 1. The light incident from coupler 132 passes through lens 106 along optical axis 130, and is reflected by mirror 108 to enter detector 110.

Communication interface 112 mediates communication with processing device 300 illustrated in Fig. 1. Communication interface 112 enables light source 102 to generate light according to an instruction from processing device 300. Communication interface 112 outputs the detection result from detector 110 to processing device 300.

### <C. Processing Device 300>

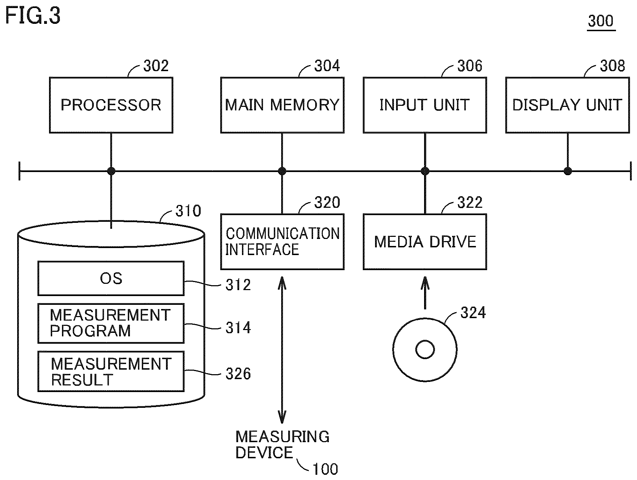

With reference to Fig. 3, processing device 300 is a computer, for example, and includes a processor 302, a main memory 304, an input unit 306, a display unit 308, a storage 310, a communication interface 320, and a media drive 322.

Processor 302 is, for example, an arithmetic processing unit such as a central processing unit (CPU) or a graphics processing unit (GPU), and is configured to read one or more computer programs stored in storage 310 into main memory 304 and execute the computer program. Main memory 304 is a volatile storage device such as DRAM (Dynamic Random Access Memory) or SRAM (Static Random Access Memory), and functions as a working memory for processor 302 to execute a computer program.

Input unit 306 includes a keyboard, a mouse, and the like, and receives an operation from a user. Display unit 308 outputs an execution result of a computer program executed by processor 302 and other information to the user.

Storage 310 is a nonvolatile storage device such as a hard disk drive (HDD) or a solid state drive (SSD), and stores computer programs, data, and the like. Storage 310 stores, for example, an operating system (OS) 312, a measurement program 314, and a measurement result 326.

Operating system 312 provides an environment for processor 302 to execute a computer program. Measurement program 314 is executed by processor 302 to realize the optical measurement method or the like according to the present embodiment.

Measurement result 326 includes an analysis result which is analyzed based on the detection result of sample S. Measurement result 326 may be transferred to a higher-level device via a network (not shown).

Communication interface 320 mediates data transmission between processing device 300 and measuring device 100.

Media drive 322 reads necessary data from a recording medium 324 (such as an optical disk) storing a computer program or the like to be executed by processor 302, and stores the data in storage 310. Measurement program 314 or the like to be executed in processing device 300 may be installed via recording medium 324 or the like, or may be downloaded from a server on a network.

All or a part of the functions provided by processor 302 of processing device 300 through executing the computer program may be realized by a hardwired logic circuit (such as FPGA (Field-Programmable Gate Array) or ASIC (Application Specific Integrated Circuit)).

### <D. Fiber Probe 2>

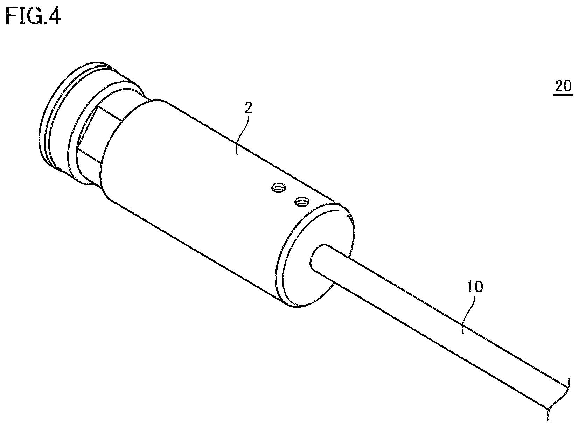

With reference to Fig. 4, probe main body 20 provided at one end of fiber probe 2 is installed in an opening (to be described later) of sample holder 200. Even when a plurality of types of sample holders 200 are prepared, the opening of sample holder 200 can be adapted to the shape (outer diameter) of probe main body 20 to increase versatility.

In optical measurement system 1 according to the present embodiment, fiber probe 2 included in optical measurement system 1 may be arbitrarily selected from a plurality of types of fiber probes prepared in advance. For example, a plurality of types of fiber probes having different ranges and angles of light to be irradiated by probe main body 20 may be prepared. Alternatively, a plurality of types of fiber probes having different ranges and angles of light to be received by probe main body 20 may be prepared. Further, a plurality of types of fiber probes having different modes (single mode and multimode) of Y-branched optical fiber 10 (optical fibers 12 and 14) may be prepared.

In optical measurement system 1, plural times of measurements may be performed on the same sample using different fiber probes 2. Also, plural times of measurements may be performed using a plurality of types of probe main bodies 20 with different angles of irradiation light to perform a multi-angle analysis or the like.

More specifically, as to be described in the following, a plurality of types of fiber probes may be prepared to enable various measurements.
(1) A fiber probe 2 that includes a probe main body 20 with a long focal length is prepared.
   Probe main body 20 may be placed outside a thick glass container to measure the sample.
(2) Fiber probes 2 with different fiber diameters of Y-branch optical fibers 10 are prepared.
   Thus, a fiber probe 2 with a smaller fiber diameter may be used to facilitate measurement of a concentrated sample (the ratio of a medium in a solution is a relatively large). On the other hand, a fiber probe 2 with a larger fiber diameter may be used to facilitate measurement of a dilute sample (the ratio of a medium in a solution is relatively small).
(3) A fiber probe 2 that includes a probe main body 20 with different scattering angles is prepared.
   For example, a fiber probe 2 may be prepared to measure both a concentrated sample and a dilute sample and a fiber probe 2 (having a small stray light component incident on probe main body 20) may be prepared to mainly measure a dilute sample.
(4) A fiber probe 2 composed of a plurality of fiber probes is prepared.

For example, the mentioned fiber probe may be used to measure a gel sample at multiple points.

### <E. Sample Holder 200>

In optical measurement system 1, a plurality of types of sample holders 200 may be prepared according to various applications such as batch measurement, in-situ measurement, incorporation into a manufacturing device, and research. Therefore, in optical measurement system 1 according to the present embodiment, sample holder 200 included in optical measurement system 1 may be arbitrarily selected from a plurality of types of sample holders prepared in advance. Hereinafter, a sample holder selected from a plurality of types of sample holders will be described as an example.

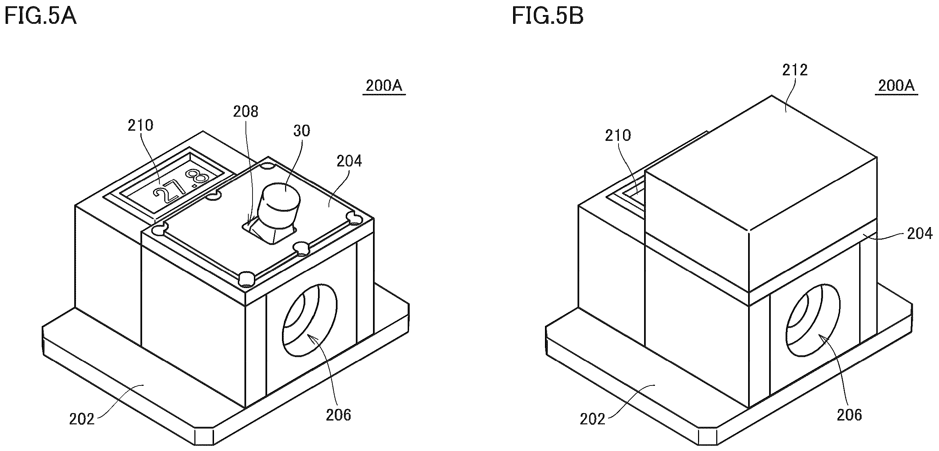

A sample holder 200A illustrated in Figs. 5A and 5B is a batch-type sample holder. Sample holder 200A is configured to perform measurement (batch measurement) on sample S that is contained in a cell 30. Cell 30 is a glass cell, a disposable cell (which is made of, for example, polystyrene or polymethyl methacrylate), or the like.

With reference to Fig. 5A, sample holder 200A includes a base plate 202, a main body 204, and a temperature sensor 210.

Main body 204 is arranged on base plate 202, and is provided with an opening 206 into which probe main body 20 of fiber probe 2 is inserted and an opening 208 for disposing cell 30 that contains sample S. Cell 30 arranged in opening 208 is irradiated with light from probe main body 20 arranged in opening 206, and a part of scattered light caused by sample S in cell 30 is incident on probe main body 20.

Temperature sensor 210 measures an ambient temperature (environmental temperature) of cell 30. The user may input the temperature measured by temperature sensor 210 to processing device 300.

A mechanism may be provided to switch the positional relationship between cell 30 and probe main body 20. For example, the mechanism may be provided to switch between a state in which a side surface of cell 30 is orthogonal to the optical axis of probe main body 20 (a state in which light is incident from a direction orthogonal to the side surface of cell 30) and a state in which the side surface of cell 30 is located at a predetermined angle with respect to the optical axis of probe main body 20 (a state in which light is incident from a direction at a predetermined angle with respect to the side surface of cell 30). For example, an attachment may be provided to change an inclination angle of opening 208 of main body 204, or a plurality of types of sample holders 200A may be provided with opening 208 having different inclination angles. By changing the incident angle of light with respect to sample S, the measurement accuracy can be improved.

In this way, sample holder 200A holds cell 30 that contains sample S at a predetermined angle with respect to probe main body 20.

With reference to Fig. 5B, a lid 212 may be arranged to cover cell 30 during measurement to prevent disturbance light from enter an exposed portion of cell 30.

A temperature adjustment mechanism may be provided in sample holder 200A to maintain the ambient temperature of cell 30 constant.

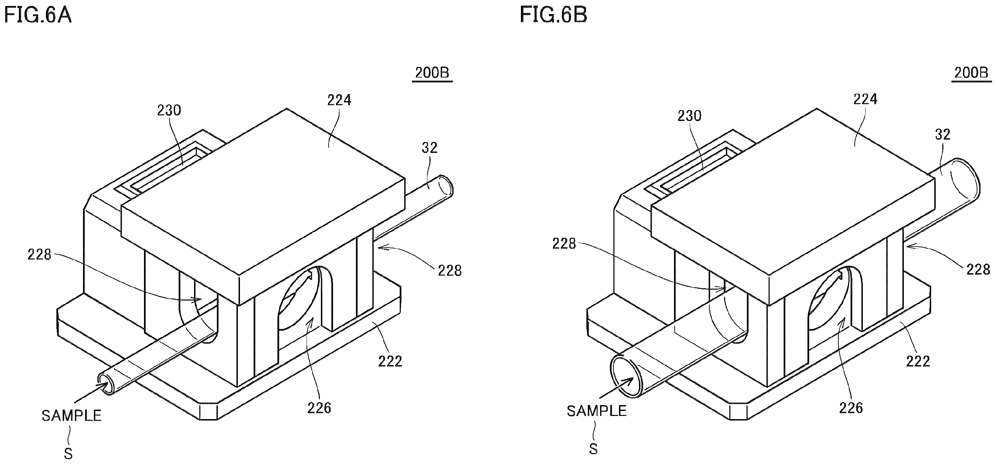

A sample holder 200B illustrated in Figs. 6A and 6B is a sample holder suitable for in-situ measurement or incorporation into a manufacturing device. In sample holder 200B, sample S present in a tube 32 is measured. Figs. 6A and 6B illustrate an example configuration in which tube 32 has different diameters.

With reference to Figs. 6A and 6B, sample holder 200B includes a base plate 222, a main body 224, and a temperature sensor 230.

Main body 224 is arranged on base plate 222, and is provided with an opening 226 into which probe main body 20 of fiber probe 2 is inserted and a pair of openings 228 through which tube 32 serving as a flow path of sample S penetrates. Tube 32 penetrating main body 224 is irradiated with light from probe main body 20 arranged in opening 226, and a part of scattered light caused by sample S in tube 32 is incident on probe main body 20.

In this way, sample holder 200B maintains the positional relationship between tube 32 through which sample S flows and probe main body 20.

Temperature sensor 230 measures an ambient temperature (environmental temperature) of tube 32. The user may input the temperature measured by temperature sensor 230 to processing device 300.

In the case of using sample holder 200B, the measurement may be performed on sample S that flows through tube 32, but in order to improve the measurement accuracy, the flow of sample S may be stopped by a valve or the like (not shown) during the measurement. In this case, a valve may be arranged in front of tube 32 and a valve may be arranged behind tube 32 with sample holder 200B sandwiched therebetween, and processing device 300 may output an instruction to open or close each valve. The diameter and the material of tube 32 may be appropriately selected according to sample S.

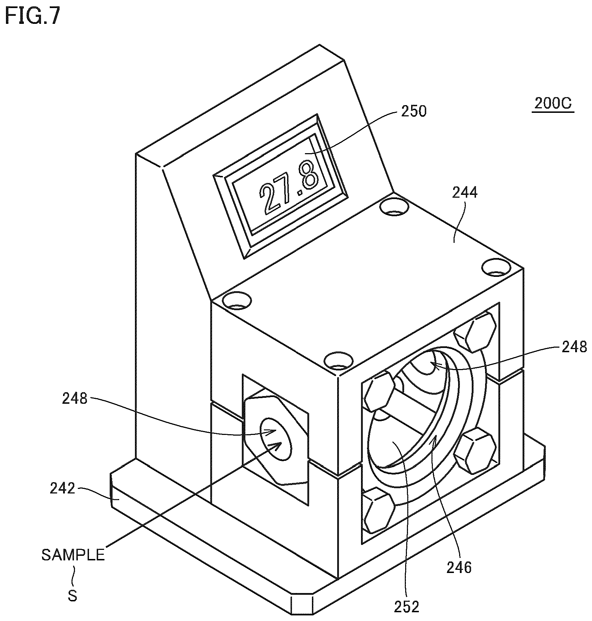

A sample holder 200C illustrated in Fig. 7 is a sample holder with a glass window suitable for in-situ measurement or incorporation into a manufacturing device. Sample S flowing through an inner space of sample holder 200C is measured.

With reference to Fig. 7, sample holder 200C includes a base plate 242, a main body 244, and a temperature sensor 250.

Main body 244 is arranged on base plate 242, and serves as a part of the flow path of sample S. Main body 244 has an internal space through which sample S flows. Main body 244 is provided with a pair of openings 248 in communication with the internal space thereof. The pair of openings 248 are connected to a pipe through which sample S flows.

Main body 244 is provided with an opening 246 into which probe main body 20 of fiber probe 2 is inserted. A transparent member 252 is provided between opening 246 and the internal space. Sample S flowing through the internal space of main body 244 is irradiated with light from probe main body 20 arranged in opening 246 through the transparent member 252, and a part of scattered light caused by sample S in tube 32 is transmitted through the transparent member 252 and incident on probe main body 20.

As described above, sample holder 200C holds sample S in the internal space and maintains the positional relationship between the internal space and probe main body 20.

Temperature sensor 250 measures an ambient temperature (environmental temperature) of main body 244. The user may input the temperature measured by temperature sensor 250 to processing device 300.

In the case of using sample holder 200C, the measurement may be performed on sample S that flows in the internal space of main body 244, but in order to improve the measurement accuracy, the flow of sample S may be stopped by a valve or the like (not shown) during the measurement. In this case, a valve may be arranged in front of the pipe and a valve may be arranged behind the pipe with sample holder 200C sandwiched therebetween, and processing device 300 may output an instruction to open or close each valve.

Sample holder 200 described above is merely an example, and various structures of sample holders 200 may be prepared according to the type of sample S, the measurement method, and the like. For example, a dispensing sample holder 200 may be prepared to include a holding stage for holding a plurality of glass cells and an injection mechanism for injecting a sample into each glass cell.

Further, in order to measure the zeta potential, a sample holder 200 may be prepared to apply a voltage (electric field) to the cell containing the sample. In this case, processing device 300 may output an instruction to apply the voltage.

### <F. Example Measurement process>

Next, an example measurement process of sample S using optical measurement system 1 according to the present embodiment will be described.

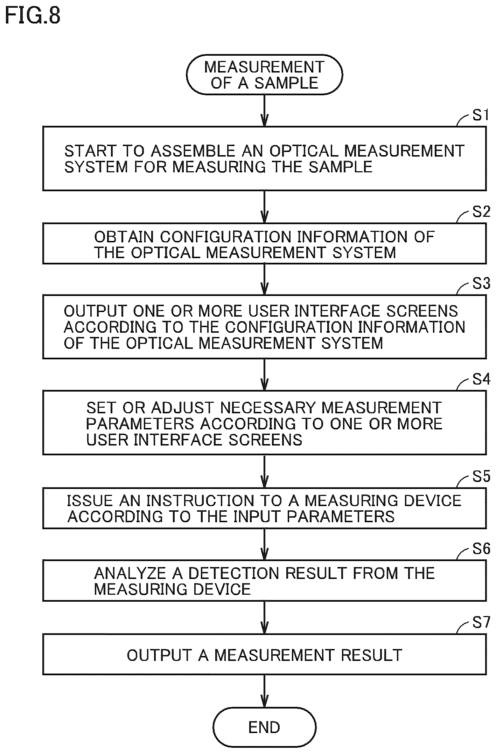

An example measurement process of sample S using optical measurement system 1 according to the present embodiment will be described with reference to Fig. 8. The user starts to assemble an optical measurement system 1 for measuring sample S (step S1). Processing device 300 obtains configuration information of optical measurement system 1 (step S2).

Processing device 300 outputs one or more user interface screens tailored to the obtained configuration information of optical measurement system 1 (step S3). The configuration information of optical measurement system 1 includes, for example, the type of sample holder 200 included in optical measurement system 1 and/or the type of fiber probe 2 included in optical measurement system 1. The type of sample holder 200 may include information about the angle at which cell 30 is arranged. In this way, processing device 300 outputs a user interface screen tailored to (or depending on) sample holder 200 included in optical measurement system 1 and/or fiber probe 2 included in optical measurement system 1.

The user arranges sample holder 200 suitable for sample S, and optically connects measuring device 100 and sample holder 200 with fiber probe 2. When sample holder 200B or sample holder 200C is used, the user may connect sample holder 200 to a pipe through which sample S flows.

The user sets or adjusts necessary measurement parameters according to one or more user interface screens (step S4). For example, the user may adjust the positional relationship between sample S and probe main body 20 based on the information displayed on the user interface screen.

When the measurement parameters have been set or adjusted by the user, processing device 300 issues an instruction to measuring device 100 according to the input parameters (step S5), analyzes the detection result from measuring device 100 (step S6), and outputs the measurement result (step S7).

Processing device 300 may output a user interface screen that is tailored to sample holder 200 included in optical measurement system 1 and/or fiber probe 2 included in optical measurement system 1 and includes the measurement result.

Processing device 300 may repeat the procedure of steps S5 to S7. When sample holder 200A is used, the user may sequentially replace cells 30, each of which contains sample S, or a robot may be used to replace cells 30.

In step S5, processing device 300 may output an instruction to close the valve so as to stop the flow of sample S.

### <G. Acquisition Process of Configuration Information>

Next, a process in which processing device 300 obtains the configuration information of optical measurement system 1 (step S2) will be described. Processing device 300 may obtain the configuration information of optical measurement system 1 from the user, or may obtain the configuration information of optical measurement system 1 by another method.

As an example method of obtaining the configuration information of optical measurement system 1 from the user, a setting unit may be provided to receive configuration information specified by the user. The setting unit receives, for example, configuration information specified by the user on sample holder 200 and fiber probe 2 to be connected.

For example, a physical switch such as a toggle switch or a dial is provided in measuring device 100, and the user operates the physical switch to select the type of sample holder 200 and the type of fiber probe 2 to assemble optical measurement system 1. Processing device 300 obtains the type of sample holder 200 and the type of fiber probe 2 indicated by the setting unit (for example, a physical switch). When the setting unit is provided in measuring device 100, processing device 300 obtains information indicated by the setting unit via communication interface 112 of measuring device 100 (Fig. 2). The setting unit may be arranged independently of measuring device 100. In this case, processing device 300 directly obtains the configuration information of optical measurement system 1 from the setting unit. As described above, processing device 300 may obtain the configuration information from the setting unit operated by the user.

Alternatively, processing device 300 may obtain the configuration information of optical measurement system 1 in accordance with a selection operation performed by the user on the user interface screen. In this case, the user selects sample holder 200 and/or fiber probe 2 to be included in optical measurement system 1 from one or more candidate sample holders 200 and/or one or more candidate fiber probes 2 displayed on the user interface screen. In this way, processing device 300 may obtain the configuration information from the user's operation on the user interface screen.

As another method for processing device 300 to obtain the configuration information of optical measurement system 1, a tag that includes identification information for identifying each of sample holder 200 and fiber probe 2 may be attached to each device. The tag indicates the identification information, for example, electromagnetically or optically. As one example, the tag may be a magnetic card, an RFID chip, a two-dimensional code, or the like. A reader may be provided to read the identification information indicated by the tag. The user causes the reader to read the tags attached respectively to sample holder 200 and fiber probe 2 which will be used to assemble optical measurement system 1. Processing device 300 obtains the identification information which is read from the tags by the reader as the configuration information of optical measurement system 1.

Thus, processing device 300 may obtain the configuration information from a reader configured to read information of the tags attached respectively to sample holder 200 and/or fiber probe 2. The reader may be provided in measuring device 100, or may be provided separately from measuring device 100.

The user may specify the type of sample holder 200 and the type of fiber probe 2 in different ways. For example, the user may use a tag to specify the type of sample holder 200, and may use a physical switch to specify the type of fiber probe 2. When the angles of cells 30 can be made different in the same sample holder 200, the user may specify the type of sample holder 200 and the angle of each cell 30.

Alternatively, processing device 300 may specify the type of sample holder 200 and the type of fiber probe 2 by image recognition or the like.

As described above, processing device 300 may obtain the configuration information of optical measurement system 1 according to any method.

### <H. Measurement Process>

Next, the process (steps S6 and S7) in which processing device 300 analyzes the detection result and outputs the measurement result will be described.

In the measurement performed according to the dynamic light scattering method, processing device 300 outputs a particle diameter or a particle diameter distribution (particle size distribution). More specifically, processing device 300 outputs a scattering intensity distribution by calculating an autocorrelation function of a temporal change (scattering intensity fluctuation) of the intensity (scattering intensity) of scattered light caused by sample S. Processing device 300 calculates the particle diameter and the particle diameter distribution based on the scattering intensity distribution.

In the measurement performed according to the electrophoretic light scattering method, processing device 300 calculates a frequency shift (zeta potential) of scattered light observed by applying an electric field to particles included in sample S. Processing device 300 calculates the frequency shift by calculating the power spectrum of the scattered light. The electrophoretic mobility is calculated based on the calculated zeta potential and the applied electric field.

In the measurement performed according to the static light scattering method, processing device 300 outputs the particle diameter and the particle diameter distribution (particle size distribution) by analyzing the temporal change (scattering intensity fluctuation) of the intensity (scattering intensity) of the scattered light caused by sample S according to the photon correlation method.

### <I. Example User Interface Screen>

Next, an example user interface screen will be described.

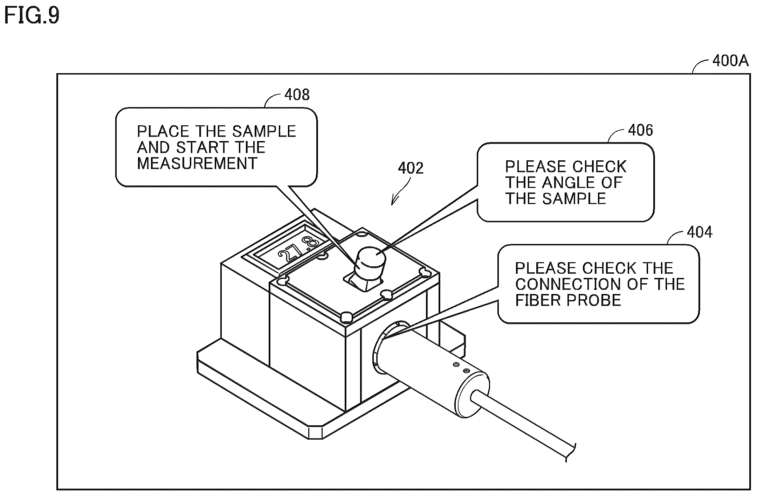

Figs. 9 to 11 illustrate example user interface screens output by processing device 300 during the system assembly according to the present embodiment.

Fig. 9 illustrates, as one example, a user interface screen 400A for assisting a user in assembling optical measurement system 1 including sample holder 200A. User interface screen 400A includes an object 402 that serves as a structure of sample holder 200A and fiber probe 2. In association with object 402, there is displayed a message 404 "please check the connection of the fiber probe" and a message 406 "please check the angle of the sample". Also, there is displayed a message 408 "place the sample and start the measurement".

The user starts to assemble optical measurement system 1 with reference to messages 404 and 406. After the assembly of optical measurement system 1, the user starts to measure sample S with reference to message 408.

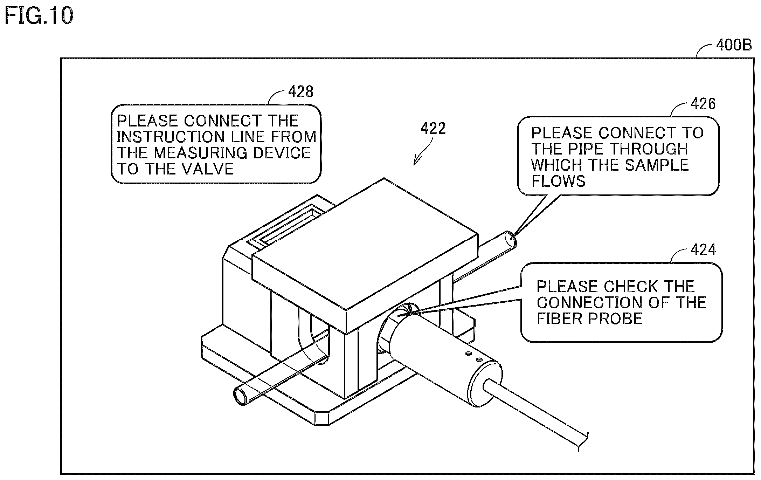

Fig. 10 illustrates, as one example, a user interface screen 400B for assisting a user in assembling optical measurement system 1 including sample holder 200B. User interface screen 400B includes an object 422 that serves as a structure of sample holder 200B and fiber probe 2. In association with object 422, there is displayed a message 424 "please check the connection of the fiber probe", a message 426 "please connect to the pipe through which the sample flows", and a message 428 "please connect the instruction line from the measuring device to the valve".

The user starts to assemble optical measurement system 1 with reference to messages 424, 426 and 428. After the assembly of optical measurement system 1, the user starts to measure sample S.

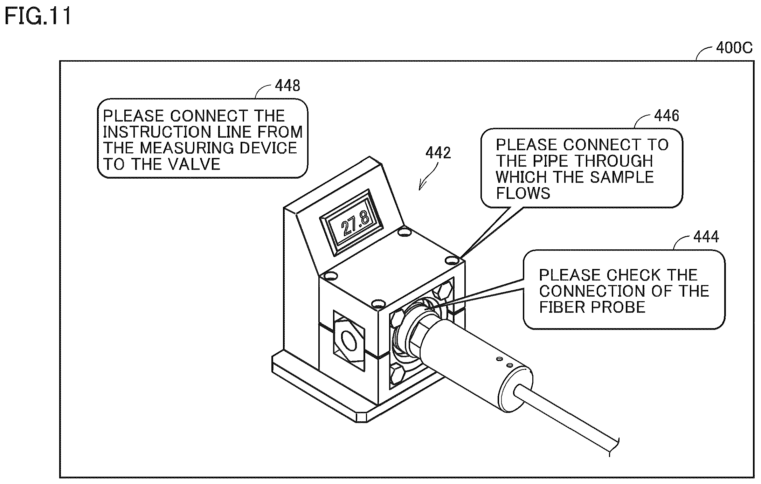

Fig. 11 illustrates, as one example, a user interface screen 400C for assisting a user in assembling optical measurement system 1 including sample holder 200C. User interface screen 400C includes an object 442 that serves as a structure of sample holder 200C and fiber probe 2. In association with object 442, there is displayed a message 444 "please check the connection of the fiber probe", a message 446 "please connect to the pipe through which the sample flows", and a message 448 "please connect the instruction line from the measuring device to the valve".

The user starts to assemble optical measurement system 1 with reference to messages 444, 446 and 448. After the assembly of optical measurement system 1, the user starts to measure sample S.

For example, processing device 300 outputs any of the user interface screens of Figs. 9 to 11 based on the obtained configuration information of optical measurement system 1 (step S3 of Fig. 8). In addition, when a dispensing sample holder 200 is selected and/or when a sample holder 200 for measuring a zeta potential is selected, processing device 300 outputs a user interface screen tailored to the selected sample holder 200.

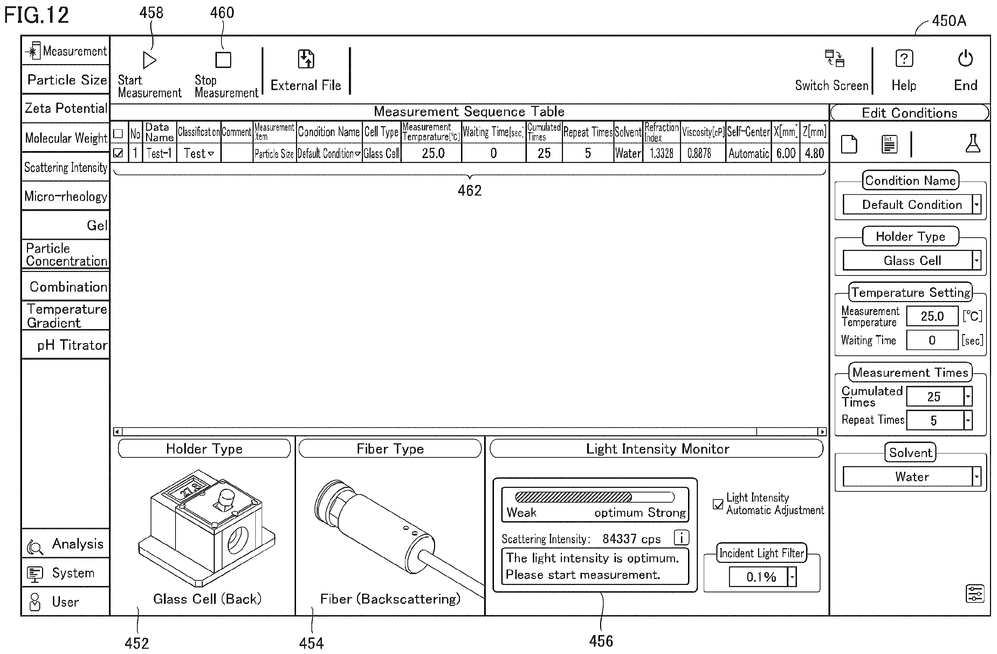

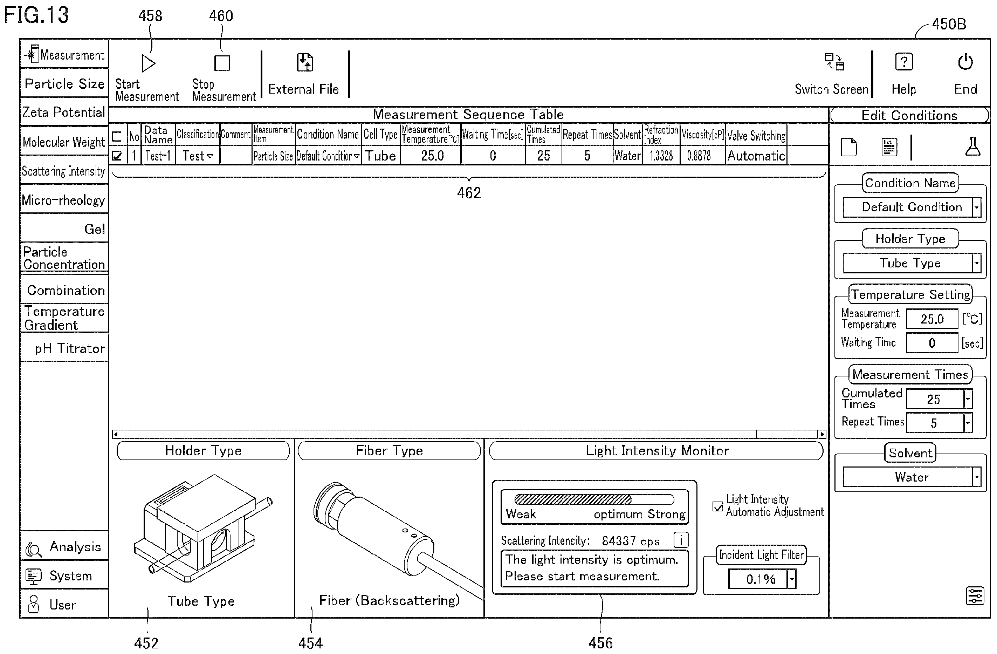

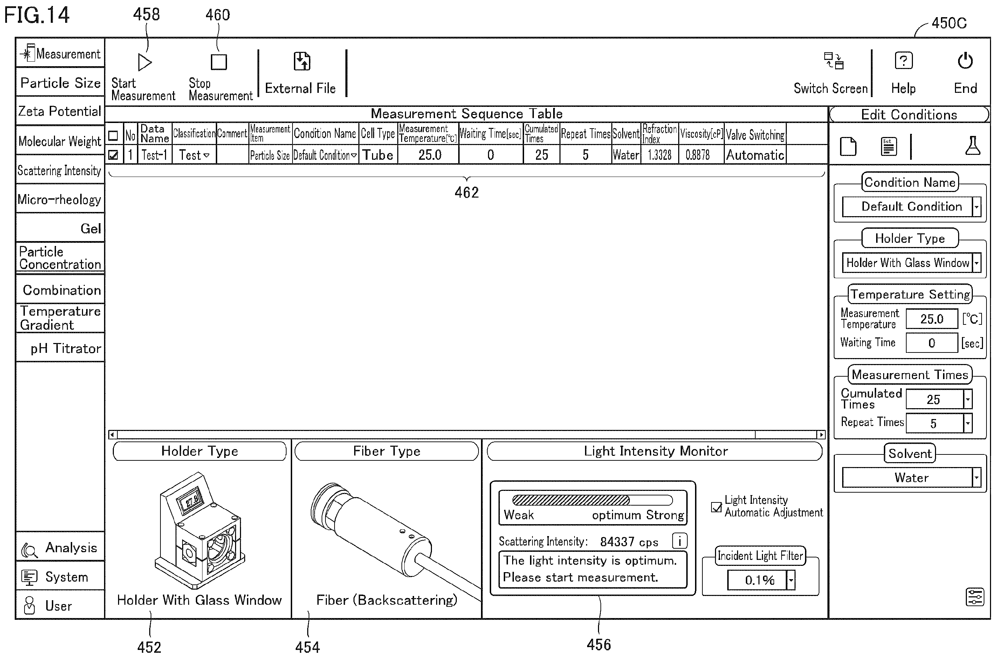

Figs. 12 to 14 illustrate example user interface screens output by processing device 300 during measurement according to the present embodiment. Fig. 12 illustrates, as an example, a user interface screen 450A of optical measurement system 1 including sample holder 200A selected by the user. Fig. 13 illustrates, as an example, a user interface screen 450B of optical measurement system 1 including sample holder 200B selected by the user. Fig. 14 illustrates, as an example, a user interface screen 450C of optical measurement system 1 including sample holder 200C selected by the user.

Each of user interface screens 450A, 450B and 450C includes an object 452 representing a selected sample holder 200 and an object 454 representing a selected fiber probe 2. Based on objects 452 and 454, the user can confirm the configuration of optical measurement system 1.

User interface screen 450A includes an object 456 that includes a light intensity monitor which displays the intensity of light (scattered light) detected via fiber probe 2. The user adjusts the positional relationship between sample holder 200 and fiber probe 2 as necessary based on the value of the light intensity monitor included in object 456.

User interface screen 450A includes a button 458 for starting the measurement and a button 460 for stopping the measurement. When the user presses the button 458, processing device 300 starts the measurement. When the button 460 is pressed, processing device 300 stops the measurement.

In user interface screen 450A, a measurement sequence may be set. For example, one or more measurement sequences 462 are displayed in the measurement sequence table. Each of the measurement sequences 462 may be arbitrarily set by the user.

As illustrated in Figs. 12 to 14, the objects 452 and 454, the contents of the measurement sequence 462, and the like are different depending on the configuration information of optical measurement system 1. In other words, processing device 300 outputs a user interface screen tailored to the configuration information of optical measurement system 1.

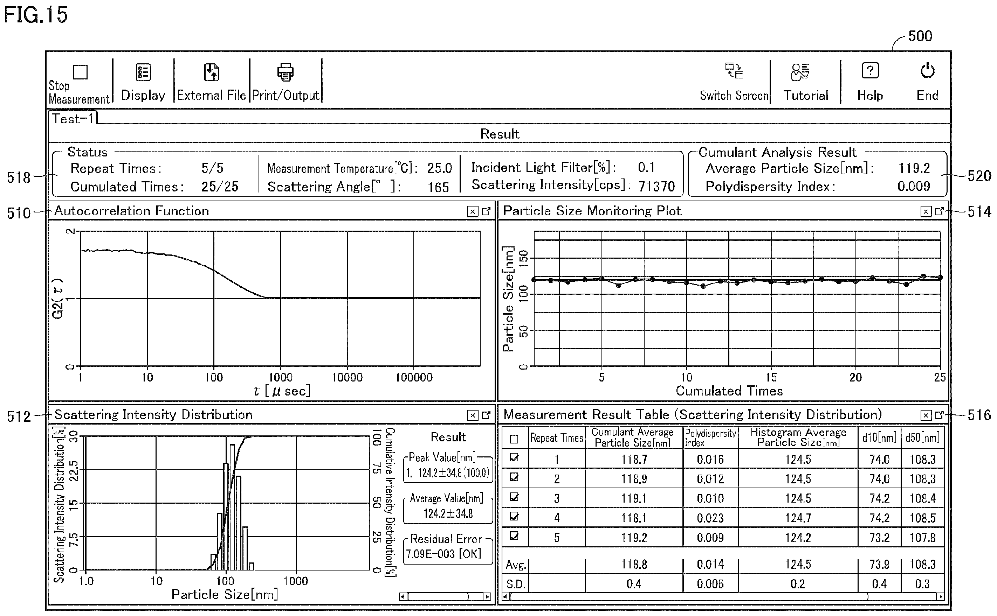

Figs. 15 to 17 illustrate example user interface screens illustrating measurement results output by processing device 300 according to the present embodiment.

A user interface screen 500 illustrated in Fig. 15 is an example illustrating a measurement result obtained in assembling an optical measurement system 1 that includes a sample holder 200A, 200B or 200C. User interface screen 500 includes, as an example measurement result, a graph 510 indicating a calculation result of an autocorrelation function, a graph 512 indicating a scattering intensity distribution, a graph 514 indicating a temporal change in particle size to be measured, and a table 516 indicating a list of measurement results.

User interface screen 500 includes a measurement status 518 and an analysis result 520 indicating an average particle size and a polydispersity index determined by the autocorrelation function according to a cumulant method.

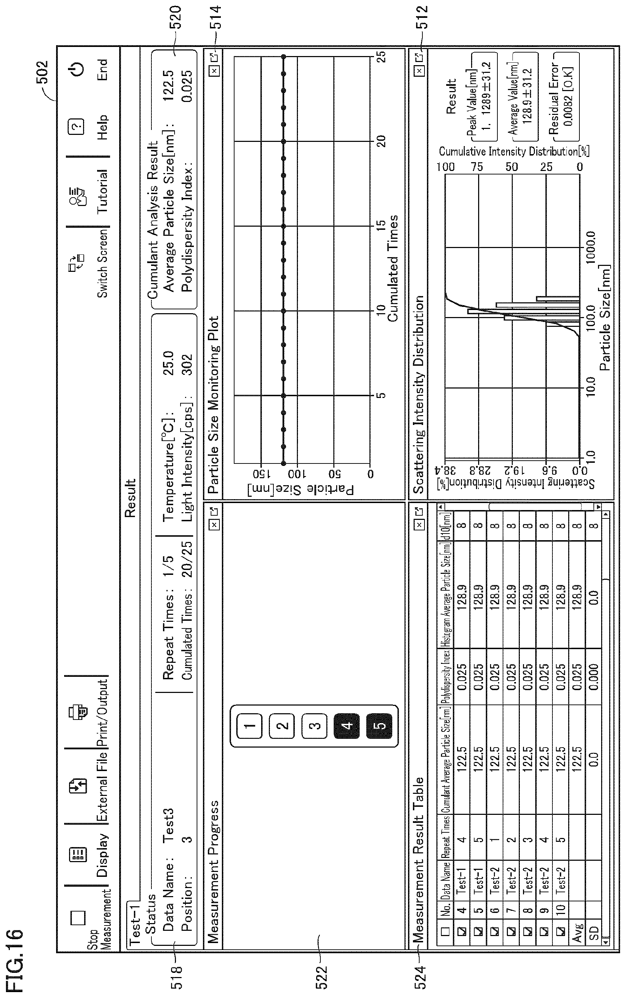

A user interface screen 502 illustrated in Fig. 16 is an example illustrating a measurement result obtained in assembling an optical measurement system 1 that includes a dispensing sample holder 200. User interface screen 502 includes, as an example measurement result, a progress indicator 522 indicating the progress of measurement performed on a plurality of cells (5 cells in the example illustrated in Fig. 16) prepared for dispensing.

User interface screen 502 includes a graph 512 indicating a scattering intensity distribution, a graph 514 indicating a temporal change in particle size to be measured, and a table 524 indicating a list of measurement results. In table 524, identification information (such as "No." and "data name" illustrated in Fig. 16) is associated with the measurement result of each cell.

User interface screen 502 includes a measurement status 518 and an analysis result 520 indicating an average particle size and a polydispersity index determined by the autocorrelation function according to a cumulant method.

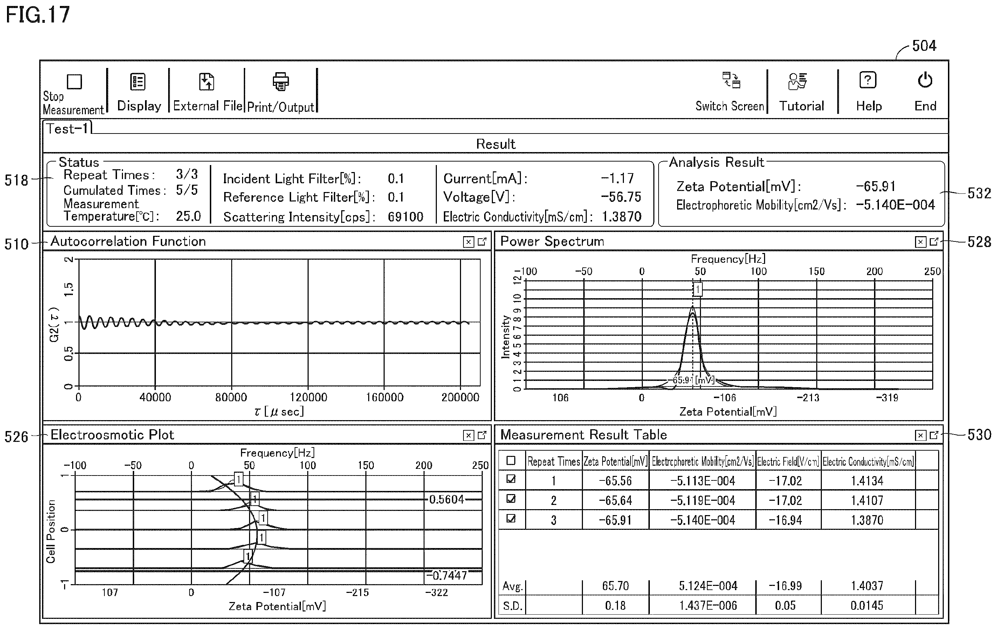

A user interface screen 504 illustrated in Fig. 17 is an example illustrating a measurement result obtained in assembling an optical measurement system 1 that includes a sample holder 200 for measuring a zeta potential. User interface screen 504 includes, as an example measurement result, a graph 510 indicating a calculation result of an autocorrelation function, a graph 526 indicating an electroosmosis spatial distribution, a power spectrum 528 of scattered light, and a table 530 indicating a list of measurement results. Table 530 includes measurements such as a zeta potential and an electrophoretic mobility for each sample.

As illustrated in Figs. 15 to 17, processing device 300 outputs a user interface screen that is tailored to the configuration information of optical measurement system 1 and includes the measurement result. The measurement result included in user interface screen 500, 502, or 504 may be arbitrarily selected and modified.

### <J. Modification>

In the embodiment described above, as an example, processing device 300 performs processes such as the process of outputting the user interface screen in addition to the analysis process and the measurement value calculation process according to the light scattering method, but the analysis process and the measurement value calculation process according to the light scattering method and the process of outputting the user interface screen may be performed using different computing resources.

### <K. Summary>

In the present embodiment, optical measurement system 1 can be assembled with measuring device 100, sample holder 200 arbitrarily selected from a plurality of types of sample holders prepared in advance, and fiber probe 2 arbitrarily selected from a plurality of types of fiber probes prepared in advance according to the needs of a user. In other words, the user can assemble an appropriate optical measurement system 1 according to the needs.

Processing device 300 outputs a user interface screen tailored to the assembled optical measurement system 1. Since the user interface screen is output according to an arbitrary combination of sample holder 200 and fiber probe 2, the user can perform the setting or the like according to the assembled optical measurement system 1, and can also confirm the measurement result according to the assembled optical measurement system 1.

Although the present invention has been described and illustrated in detail, it should be understood that the embodiments disclosed herein are illustrative and non-restrictive in all respects. The scope of the present invention is defined by the terms of the claims, and is intended to include any modifications within the scope and meaning equivalent to the terms of the claims.

## Claims

1. An optical measurement system (1) configured to perform measurement according to a light scattering method, the optical measurement system comprising:
a sample holder (200; 200A; 200B; 200C) configured to hold a sample (S);
a light source (102) configured to generate light to irradiate the sample;
a detector (110) configured to detect scattered light caused by the sample;
a fiber probe (2) that comprises a probe (20) which is connected to the sample holder and arranged adjacent to the sample, and an optical fiber (10, 12, 14) which optically connects the probe to the light source and the detector; and
a processing device (100) configured to analyze a detection result from the detector and output a measurement result (326),
the sample holder being arbitrarily selected from a plurality of types of sample holders prepared in advance, and
the processing device outputting a user interface screen (400A; 400B: 400C; 450A; 450B; 450C; 500; 502; 504) tailored to the sample holder.

2. The optical measurement system according to claim 1, wherein
the fiber probe is arbitrarily selected from a plurality of types of fiber probes prepared in advance, and
the user interface screen output by the processing device is tailored to the fiber probe.

3. The optical measurement system according to claim 1 or 2, wherein
the processing device is configured to obtain configuration information indicating a type of the sample holder included in the optical measurement system.

4. The optical measurement system according to claim 3, wherein
the processing device is configured to obtain the configuration information from at least one of a setting unit operated by a user, an operation performed on the user interface screen by a user, or a reader configured to read information of a tag attached to the sample holder.

5. The optical measurement system according to any of claims 1 to 4, wherein
the plurality of types of sample holders includes a first sample holder (200A) configured to hold a cell (30) containing the sample at an angle relative to the probe.

6. The optical measurement system according to any one of claims 1 to 5, wherein
the plurality of types of sample holders includes a second sample holder (200B) configured to maintain a positional relationship between the probe and a tube (32) through which the sample flows.

7. The optical measurement system according to any one of claims 1 to 6, wherein
the plurality of types of sample holders include a third sample holder (200C) configured to hold the sample in an internal space and maintain a positional relationship between the internal space and the probe.

8. The optical measurement system according to any one of claims 1 to 7, wherein
the processing device is configured to output the user interface screen that is tailored to the sample holder and includes a measurement result.

9. A computer program (314) executed by a computer (300) included in an optical measurement system (1) configured to perform measurement according to a light scattering method, wherein
the optical measurement system comprises:
a sample holder (200; 200A; 200B; 200C) configured to hold a sample (S);
a light source (102) configured to generate light to irradiate the sample;
a detector (110) configured to detect scattered light caused by the sample; and
a fiber probe (2) that comprises a probe (20) which is connected to the sample holder and arranged adjacent to the sample, and an optical fiber (10, 12, 14) which optically connects the probe to the light source and the detector,
the sample holder is arbitrarily selected from a plurality of types of sample holders prepared in advance, and
the computer program causes the computer to perform operations comprising:
obtaining (S2) configuration information indicating a type of the sample holder included in the optical measurement system;
outputting (S3) a user interface screen (400A; 400B: 400C; 450A; 450B; 450C; 500; 502; 504) tailored to the sample holder; and
analyzing (S6, S7) a detection result from the detector and outputting a measurement result (326).
